# EUROPÄISCHE PATENTSCHRIFT

(11) **EP 2 059 427 B1**
(45) Veröffentlichungstag und Bekanntmachung des Hinweises auf die Patenterteilung: **13.04.2011**
(21) Anmeldenummer: 07765044.8
(22) Anmeldetag: 04.07.2007
(51) Int. Cl.: B60T 15/02, B60T 7/08, F16K 31/06

(54) **VENTILEINHEIT, ELEKTROPNEUMATISCHE BREMSSTEUERUNGSEINRICHTUNG MIT EINER DERARTIGEN VENTILEINHEIT ZUR STEUERUNG EINER FESTSTELLBREMSE, FAHRZEUGBREMSANLAGE MIT EINER DERARTIGEN BREMSSTEUERUNGSEINRICHTUNG UND FAHRZEUG MIT EINER DERARTIGEN BREMSANLAGE**
VALVE UNIT, ELECTRO-PNEUMATIC BRAKE CONTROL DEVICE HAVING A VALVE UNIT OF SAID TYPE FOR CONTROLLING A PARKING BRAKE, VEHICLE BRAKE SYSTEM HAVING A BRAKE CONTROL DEVICE OF SAID TYPE AND VEHICLE HAVING A BRAKE SYSTEM OF SAID TYPE
UNITÉ DE SOUPAPE, DISPOSITIF DE COMMANDE DE FREINAGE ÉLECTROPNEUMATIQUE COMPRENANT UNE UNITÉ DE SOUPAPE DE CE TYPE POUR LA COMMANDE D'UN FREIN DE STATIONNEMENT, SYSTÈME DE FREINAGE DE VÉHICULE COMPRENANT UN DISPOSITIF DE COMMANDE DE FREINAGE DE CE TYPE ET VÉHICULE COMPRENANT UN TEL SYSTÈME DE FREINAGE

(30) Priorität: 31.08.2006 DE 102006041010
(43) Veröffentlichungstag der Anmeldung: 20.05.2009
(73) Patentinhaber: WABCO GmbH, 30453 Hannover (DE)
(72) Erfinder: BENSCH, Uwe, 30161 Hannover (DE); HELMER, Jörg, 88267 Vogt (DE); HÖLSCHER, Reiner, 30926 Seelze (DE); KIEL, Bernd-Joachim, 31515 Wunstorf (DE); MENZE, Wilfried, 31832 Springe (DE); ROVIRA-RIFATERRA, Juan, 30827 Garbsen (DE)
(74) Vertreter: Lauerwald, Jörg
(86) Internationale Anmeldenummer: PCT/EP2007/005908
(87) Internationale Veröffentlichungsnummer: WO 2008/025398

(56) Entgegenhaltungen:
- EP-A1- 1 571 061
- WO-A-2006/007970
- DE-A1- 3 501 708
- DE-A1- 10 336 611

## Beschreibung

Die Erfindung betrifft eine Ventileinheit für eine elektropneumatische Bremssteuerungseinrichtung zur Steuerung einer Fahrzeugbremse nach dem Oberbegriff des Anspruchs 1. Ferner betrifft die Erfindung gemäß Anspruch 14 eine zur Steuerung der Feststellbremse eines Fahrzeugs vorgesehene elektropneumatische Bremssteuerungseinrichtung mit einer derartigen Ventileinheit. Des Weiteren betrifft die Erfindung gemäß Anspruch 17 eine elektrisch gesteuerte pneumatische Fahrzeugbremsanlage mit einer derartigen Bremssteuerungseinrichtung. Schließlich betrifft die Erfindung gemäß Anspruch 18 ein Fahrzeug mit einer derartigen elektrisch gesteuerten pneumatischen Bremsanlage.

Ventileinrichtungen für elektropneumatische Bremssteuerungseinrichtungen zur Steuerung von Fahrzeug-Feststellbremsen sind bspw. aus DE 103 36 611 A1 oder EP 1 571 061 A1 bekannt. Diese bekannten Bremssteuerungseinrichtungen werden in Bremsanlagen eingesetzt, die neben einer mittels eines Bremspedals betätigbaren Betriebsbremse eine Feststellbremse (oftmals auch als Parkbremse oder Handbremse bezeichnet) aufweisen, welche mittels eines elektrischen Signalgebers betätigbar ist.

Die Feststellbremse wird bei diesen bekannten Bremsanlagen regelmäßig mittels als Federspeicherbremszylinder ausgebildeten Bremszylindern eingelegt. Um die Feststellbremse zu lösen, muss der Federspeicherteil der Federspeicherbremszylinder mit Druckluft beaufschlagt werden. Hierzu ist ein Belüften des Federspeicherteils erforderlich. Der notwendige Druck zum Belüften wird aus einem Druckluftvorrat zugeführt. Diese Druckzufuhr ist jedoch nicht permanent eingeschaltet, sondern kann auch abgesperrt werden. Ferner kann auch der Druck im Federspeicherbremszylinder abgesenkt, der Federspeicherteil also entlüftet werden.

Zur Steuerung des Druckes im Federspeicherbremszylinder ist herkömmlicherweise ein Relaisventil vorgesehen, mittels dessen die Druckzufuhr von dem Druckluftvorratsbehälter zum Federspeicherteil der Federspeicherbremszylinder steuerbar ist. Die Steuerung erfolgt unter Zuhilfenahme elektropneumatischer Ventileinrichtungen, insbesondere mittels elektrisch betätigbarer Magnetventile, die einen am Relaisventil zugeführten Steuerdruck regulieren.

Bei einer bekannten Bremsanlage gemäß DE 103 36 611 A1 wird hierzu ein Bistabilventil eingesetzt, d.h. ein Ventil, das zwei stabile Zustände einnehmen kann und im Falle eines Stromausfalls den momentan eingestellten Zustand behält. Ferner ist bei dieser Bremsanlage zwischen das Bistabilventil und den Steuereingang des Relaisventils ein Haltenventil geschaltet. Mittels des Bistabilventils und des Haltenventils kann der Druck am Steuereingang entweder gehalten, erhöht oder abgesenkt werden. In entsprechender Weise verändert sich der Druck am Ausgang des Relaisventils. Auf diese Weise kann mittels elektrischer Signale an das Bistabilventil und das Haltenventil die Feststellbremse gelöst oder eingelegt werden.

Das Bistabilventil ist jedoch aufgrund seines Aufbaus kompliziert und daher teuer. Ferner verbleibt das Bistabilventil, wie oben erwähnt, bei einem Ausfall der elektrischen Energieversorgung in seinem vorherigen Zustand. Daher kann bei einem Ausfall der elektrischen Energieversorgung ein Fahrzeug mit einer derartigen Bremsanlage nicht sicher abgestellt werden, d.h. nicht derart abgestellt werden, dass der Federspeicherteil des Federspeicherbremszylinders entlüftet und dadurch die Feststellbremse einlegt ist.

Zwar wurden bereits in DE 35 01 708 A1 elektromagnetisch betätigbare Mehrwegeventile vorgeschlagen, die in ihrem Aufbau weniger kompliziert sind. Insbesondere wurde vorgeschlagen, in einem Mehrwegeventil zwei einander gegenüberliegend angeordnete Ventile anzuordnen. Dabei ist jedem der beiden Ventile je ein Anker zugeordnet, welche mit einer zwischen den beiden Ventilen angeordneten Spule zusammenwirken. Die den Ankern zugeordneten Federn sind dabei derart ausgelegt, dass unterschiedliche Magnetkräfte zur Betätigung der beiden Ventile erforderlich sind. Diese Magnetkräfte werden durch Anlegen eines durch die Spule fließenden Stromes erzeugt. Indem jedem Ventil ein separater Anker zugeordnet ist, wird eine voneinander unabhängige Betätigung der beiden Ventile durch entsprechende Bestromung der Spule ermöglicht.

Diese bekannte Ventileinheit hat jedoch den Nachteil, dass im unbestromten Zustand der Eingang der Ventileinheit mit dem zum Verbraucher führenden Ausgang verbunden ist. Würde man eine derartige Ventileinheit anstelle des o.g. Bistabilventils und Haltenventils verwenden, würde im Falle eines Ausfalls der elektrischen Energieversorgung der volle Vorratsdruck auf den Steuereingang des Relaisventils angewendet und somit infolge der sich daraus ergebenden Belüftung des Federspeicherteils der Federspeicherbremszylinder die Feststellbremse gelöst werden. Dies ist jedoch unerwünscht, da im Falle eines Ausfalls der elektrischen Energieversorgung das Fahrzeug nicht mehr sicher abgestellt werden kann. Diese bekannten Ventile sind daher ungeeignet für die Steuerung des Druckes in einem Federspeicherbremszylinder einer Feststellbremse.

WO 2006/007970 A1 offenbart eine Ventilsteuereinrichtung für eine elektronischpneumatische Bremsanlage, bei der jeweils eine Ventileinheit als Ventil-Modulator-Einrichtung für einen Bremsdruckregelkreis ausgebildet ist. Die Ventileinheit ist aus einem Belüftungsventil mit einem Primäranker und einem Entlüftungsventil mit einem Sekundäranker aufgebaut. Für beide Magnetanker ist eine gemeinsame Ankerführung vorgesehen sowie eine Steuerung durch den Magnetstrom einer gemeinsamen Magnetspule.

Der Erfindung liegt daher die Aufgabe zugrunde, eine einfache, günstige Ventileinheit für eine elektropneumatische Bremssteuerungseinrichtung zur Steuerung einer Feststellbremse bereitzustellen, welche auch im Falle eines Ausfalls der elektrischen Spannungsversorgung ein sicheres Abstellen des Fahrzeugs ermöglicht.

Diese Aufgabe wird durch die in den Patentansprüchen 1, 14, 17 und 18 angegebene Erfindung gelöst.

Die erfindungsgemäße Ventileinheit ist derart ausgebildet, dass im unbestromten Zustand keine Belüftung einer luftmengenverstärkenden Ventileinrichtung erfolgt, sondern eine Entlüftung. Daher wird auch im Falle eines Ausfalls der elektrischen Energieversorgung der Steuereingang der luftmengenverstärkenden Ventileinrichtung permanent entlüftet. Am Ausgang der luftmengenverstärkenden Ventileinrichtung ist ein Feststellbremssystem mit Federspeicherbremszylindern anschließbar. Derartige Federspeicherbremszylinder sind derart ausgebildet, dass sie im entlüfteten Zustand bremsen und lediglich im belüfteten Zustand die Federspeicherbremszylinder die Feststellbremse lösen. Auf diese Weise ist sichergestellt, dass auch im Falle eines Ausfalls der elektrischen Energieversorgung die Federspeicherbremszylinder der Feststellbremse entlüftet und damit die Feststellbremse eingelegt wird.

Durch die als Doppelankermagnetventil vorgesehene Ventileinheit können mit nur einer Spule zwei Ventile, nämlich ein Belüftungsventil und ein Entlüftungsventil betätigt werden. Hierdurch verringert sich zum einen der Aufwand beim Aufbau der Ventileinheit. Zum anderen verringert sich der Aufwand bei der Kontaktierung und bei der elektrischen Ansteuerung der Ventileinheit, da lediglich zwei Anschlüsse für die Magnetspule erforderlich sind. Ebenso reduziert sich die Anzahl der benötigten Endstufen zum Bestromen dieses Magnetventils, einschl. der zu den Endstufen gehörenden Bauteile. Ferner wird die gesamte Stromaufnahme durch die Verwendung lediglich einer Spule für zwei Ventile reduziert. Hieraus folgt ein günstigeres Wärmeverhalten der Bremssteuerungseinrichtung.

Des weiteren ergibt sich eine kompakte Bauweise der Ventileinheit gegenüber einer herkömmlichen Ventileinrichtung bestehend aus einem Bistabilventil und einem Haltenventil. Aufgrund der kompakteren Bauweise sowie der geringeren Anzahl von Bauteilen können ferner auch die Herstellkosten signifikant reduziert werden.

Im vorliegenden Zusammenhang ist der Begriff "Verbindungsorgan" derart zu verstehen, dass er jedwede Verbindungsmittel umfasst, wie insbesondere pneumatische Verbindungsleitungen, Verbindungskanäle, Verbindungsbohrungen oder sonstige Durchgänge sowie Verbindungsanschlüsse, insbesondere Anschlüsse für pneumatische Verbindungsleitungen, -kanäle, und -bohrungen.

Die Ventileinheit ist entweder als selbstständige Vorrichtung oder als unselbstständiger, integraler Teil einer Bremssteuerungseinrichtung ausgebildet.

Bei stromloser Magnetspule befinden sich sowohl der Primäranker als auch der Sekundäranker des Doppelankermagnetventils in einer durch entsprechende Federn vorgegebenen Grundstellung, in der das Entlüftungsventil des Doppelankermagnetventils eine Entlüftung des Steuereingangs der luftmengenverstärkenden Ventileinrichtung aktiviert, insbesondere indem ein zum Steuereingang der luftmengenverstärkenden Ventileinrichtung führendes Verbindungsorgan, das sog. dritte Verbindungsorgan, mit einem zu einer Entlüftungseinrichtung führenden Verbindungsorgan, dem sog. zweiten Verbindungsorgan, verbunden wird. Der Steuereingang ist auf diese Weise entlüftbar. Zugleich befindet sich das Belüftungsventil in seiner Grundstellung und zwar derart, dass eine Belüftung des Steuereingangs der luftmengenverstärkenden Ventileinrichtung abgesperrt wird, insbesondere indem ein zum Druckluftvorrat führendes erstes Verbindungsorgan der Ventileinheit vom dritten Verbindungsorgan zum Steuereingang der luftmengenverstärkenden Ventileinrichtung abgesperrt wird. Auf diese Weise wird dem Steuereingang keine weitere Druckluft zugeführt. Im stromlosen Zustand findet somit eine permanente, insbesondere gedrosselte Entlüftung des Steuereingangs der luftmengenverstärkenden Ventileinrichtung und somit über die luftmengenverstärkende Ventileinrichtung eine Entlüftung der Federspeicherbremszylinder statt. Auf diese Weise ist sichergestellt, dass die Feststellbremse eingelegt wird.

Bei Einspeisung eines ersten niedrigen Stroms in die Magnetspule wird zunächst nur der Primäranker und somit das Entlüftungsventil der Ventileinheit bestromt und auf diese Weise in seine Schaltstellung versetzt. Bei diesem niedrigen Strom verbleibt jedoch der Sekundäranker in seiner federbelasteten Grundstellung. In der Schaltstellung des Primärankers wird mittels des Entlüftungsventils die Entlüftung des Steuereingangs der luftmengenverstärkenden Ventileinrichtung abgesperrt, insbesondere indem das zur Entlüftungseinrichtung führende zweite Verbindungsorgan vom zum Steuereingang führenden dritten Verbindungsorgan abgesperrt wird. Auf diese Weise kann der Druck am Steuereingang auf seinem aktuellen Wert gehalten werden. Durch Einspeisung eines höheren Stromes in die Magnetspule wird dann auch der Sekundäranker in seine Schaltstellung versetzt, so dass das Belüftungsventil die Belüftung des Steuereingangs der luftmengenverstärkenden Ventileinrichtung aktiviert. Dabei verbindet insbesondere das Belüftungsventil das zum Druckluftvorrat führende erste Verbindungsorgan mit dem zum Steuereingang führenden dritten Verbindungsorgan. Durch diese Verbindung wird die luftmengenverstärkende Ventileinrichtung belüftet und in der Folge der Federspeicherteil des Federspeicherbremszylinders. In diesem Zustand wird die Feststellbremse gelöst, so dass das Fahrzeug in einen Fahrzustand versetzt wird.

Bevorzugterweise verbindet bei stromloser Magnetspule das Entlüftungsventil das zweite zur Entlüftungseinrichtung führende Verbindungsorgan mit dem dritten zum Steuereingang der luftmengenverstärkenden Ventileinrichtung führenden Verbindungsorgan über eine Blende bzw. Drossel. Auf diese Weise ist der Steuereingang der luftmengenverstärkenden Ventileinrichtung gedrosselt entlüftbar. Dies hat den Vorteil, dass das Fahrzeug auch bei einem Ausfall der elektrischen Energieversorgung, insbesondere der Bremssteuerungseinrichtung langsam eingebremst wird und sicher abgestellt werden kann. Erreicht wird dies durch eine als Drossel wirkende Blende am Entlüftungsventil der Ventileinheit, welche in stromlosen Zustand der Magnetspule wirksam ist. D.h. der Druck am Steuereingang einer luftmengenverstärkenden Ventileinrichtung wird langsam über diese Blende abgesenkt, so dass auch der Druck im Federspeicherteil des Federspeicherbremszylinders langsam absinkt und somit die Feststellbremse langsam eingelegt wird.

Besonders bevorzugt wird die Magnetspule mit einem alternierenden Magnetstrom insbesondere einem getakteten Magnetstrom beaufschlagt, wobei dieser alternierende Strom derart bemessen ist, dass der Primäranker getaktet betätigt wird, während der Sekundäranker unbetätigt in seiner Grundstellung verbleibt. Auf diese Weise kann eine schnelle Entlüftung des Steuerraums der luftmengenverstärkenden Ventileinrichtung erzielt werden. Durch ein schnelles Hin- und Herschalten des Entlüftungsventils zwischen seiner Grundstellung und seiner Schaltstellung gelangt nämlich Druckluft aus dem Steuerraum der luftmengenverstärkenden Ventileinrichtung zunächst an einen ersten Auslass des Entlüftungsventils, der jedoch mit der Drossel des Entlüftungsventils verbunden ist. Daher kann die Druckluft über diesen Weg eigentlich nicht schnell entweichen. Aufgrund des sich unmittelbar anschließenden Umschaltens des Entlüftungsventils in seine Schaltstellung wird jedoch die sich nunmehr vor der Drossel befindende Druckluft direkt über einen entsprechenden Weg bzw. Kanal im Entlüftungsventil zu einer Entlüftungseinrichtung entlassen. Die bei einem einzelnen Schaltvorgang entweichende Luftmenge ist bei einem einzelnen Schaltvorgang des Entlüftungsventils zwar nicht allzu groß und hängt von einem zur Verfügung gestellten Volumen ab. Jedoch kann durch häufiges und schnelles Hin- und Herschalten eine schnelle Entlüftung des Steuerraums der luftmengenverstärkenden Ventileinrichtung erreicht werden. Vorteilhafterweise ist zu diesem Zweck zwischen der Blende und einem Auslass des Entlüftungsventils ein Druckluftspeicher vorgesehen, um die zu entlassene Luftmenge zu vergrößern.

Bei einer bevorzugten Ausführungsform springt der alternierende Magnetstrom zwischen dem Wert Null und einem der Stärke des o.g. ersten Magnetstroms entsprechendem Wert hin und her. Diese Ausführungsform hat den Vorteil, dass dieser erste Magnetstrom lediglich getaktet, d.h. ein- und ausgeschaltet werden muss. Alternativ kann der alternierende Magnetstrom aber auch zwischen zwei dichter beieinander liegenden Stromwerten erzeugt werden, wodurch die Schaltstellungen des Primärankers schneller gewechselt werden können.

Bei einer weiteren bevorzugten Ausführungsform weisen der Primäranker und der Sekundäranker unterschiedliche Durchmesser auf. Insbesondere weist der Sekundäranker einen kleineren Durchmesser auf als der Primäranker. Hierdurch ergibt sich erstens der Vorteil, dass die Konstruktion der Ankerführungsanordnung derart gestaltet werden kann, dass das Ankerführungsrohr samt der beiden Magnetanker von einer Seite in die Spule montierbar ist. Zweitens ergibt sich der Vorteil, dass aufgrund der unterschiedlichen Größen, insbesondere Durchmesser der Anker unterschiedliche Magnetkräfte auf die Anker wirken. Hierdurch kann das Schaltverhalten der Ventileinheit günstig beeinflusst werden. Wie vorstehend ausgeführt, soll nämlich zunächst der Primäranker von der Magnetspule und erst bei einem höheren Strom auch der Sekundäranker angezogen werden.

Vorteilhafterweise tauchen der Primäranker und der Sekundäranker unterschiedlich tief in die Magnetspule ein. Insbesondere taucht der Primäranker tiefer in die Magnetspule ein als der Sekundäranker. Dies hat den Vorteil, dass die von der Magnetspule auf den Primäranker ausgeübte Magnetkraft größer ist als die von der Magnetspule auf den Sekundäranker ausgeübte Magnetkraft. Auch hierdurch wird das Schaltverhalten der Ventileinheit günstig beeinflusst.

Bei einer weiteren vorteilhaften Ausführungsform ist die auf den Primäranker ausgeübte Federkraft einer zugeordneten Feder kleiner als die auf den Sekundäranker ausgeübte Federkraft einer weiteren, dem Sekundäranker zugeordneten Feder. Vorteilhafterweise werden hierzu Federn unterschiedlicher Stärke verwendet. Auch diese Maßnahme verbessert das Schaltverhalten des Magnetventilsystems.

Bei einer weiteren Ausführungsform sind der Primäranker und der Sekundäranker baugleich ausgeführt. Dies hat den Vorteil, dass aufgrund größerer Stückzahlen die Herstellkosten dieser Anker reduziert werden können.

Weitere vorteilhafte Ausführungsformen ergeben sich aus den Unteransprüchen sowie aus den anhand der beigefügten Zeichnungen näher erläuterten Ausführungsbeispielen. In der Zeichnung zeigt:
- Fig. 1: eine Druckluftbremsanlage in vereinfachter schematischer Darstel- lung mit einer elektropneumatischen Bremssteuerungseinrichtung zur Steuerung einer Feststellbremse einschließlich zweier Ventileinheiten gemäß einem Ausführungsbeispiel der Erfindung;
- Fig. 2: eine Ventileinheit gemäß einem Ausführungsbeispiel der Erfindung für eine Bremssteuerungseinrichtung gemäß Fig. 1;
- Fig. 3: eine Ventileinheit gemäß einem weiteren Ausführungsbeispiel der Erfindung für eine Bremssteuerungseinrichtung gemäß Fig. 1 und
- Fig. 4: eine schematische Darstellung einer Bremssteuerungseinrichtung für eine Feststellbremse einschließlich einer Ventileinheit gemäß einem weiteren Ausführungsbeispiel der Erfindung.

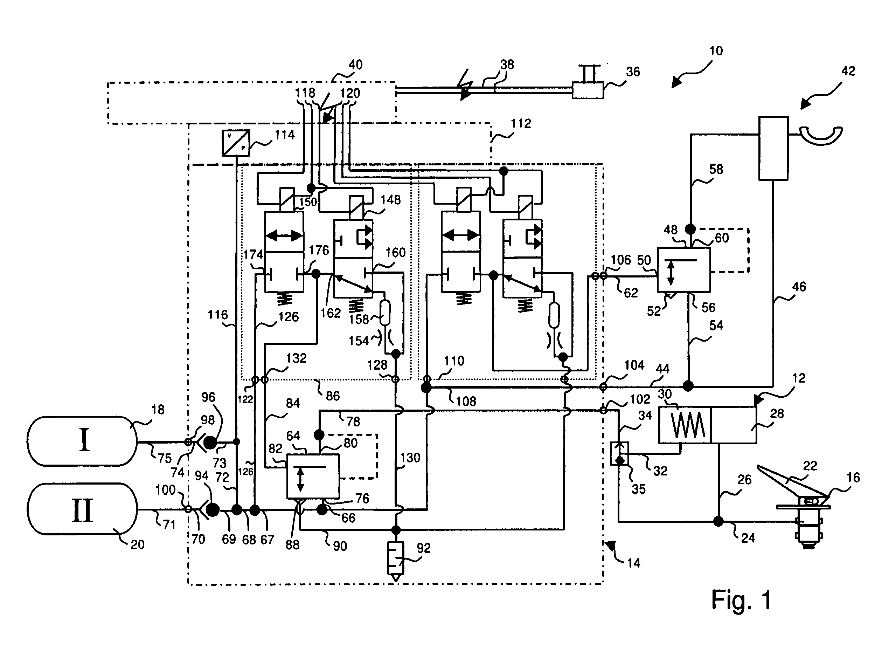

Fig. 1 zeigt schematisch einen Teil einer Druckluftbremsanlage 10 für ein Fahrzeug und zwar insbesondere eine elektropneumatische Bremssteuerungseinrichtung zur Steuerung einer Feststellbremse des Fahrzeugs. Derartige Druckluftbremsanlagen werden bspw. bei Nutzfahrzeugen, Lastkraftwagen oder Bussen verwendet. Besondere Anwendung finden derartige Bremsanlagen bei Fahrzeugzügen bestehend aus einem Zugfahrzeug und einem Anhänger.

Fig. 1 zeigt lediglich die zum Verständnis der vorliegenden Erfindung wichtigsten Komponenten der Bremsanlage 10. Die Bremsanlage 10 wird elektrisch gesteuert, d.h. die Bremsdruckzumessung zu Bremszylindern zur Betätigung von an den Fahrzeugrädern vorgesehenen Radbremsen wird durch elektrische bzw. elektronische Steuerelemente gesteuert. Die Bremszylinder sind teilweise oder vollständig als kombinierte Betriebs- und Federspeicherbremszylinder 12 (in Fig. 1 ist der Übersichtlichkeit halber lediglich ein derartiger Bremszylinder dargestellt) ausgebildet, wobei der Federspeicherteil von einer als Feststellbremsmodul 14 ausgebildeten elektropneumatischen Bremssteuerungseinrichtung zur Steuerung der Feststellbremse gesteuert wird.

Die Bremsanlage 10 weist einen Bremswertgeber 16 auf, der einen Bremswunsch des Fahrers erfasst. Der Bremswertgeber 16 umfasst einen elektrischen Teil und einen pneumatischen oder hydraulischen Teil, wobei in Fig. 1 lediglich der pneumatische Teil dargestellt ist. Der pneumatische Teil wird von einem ersten Druckluftvorratsbehälter 18 und einem zweiten Druckluftvorratsbehälter 20 mit Druckluft über (nicht dargestellte) Druckluftleitungen versorgt. Diese Druckluftvorratsbehälter 18, 20 dienen der Druckluftversorgung der Bremszylinder der Betriebsbremse. Sie können aber auch, wie in Fig. 1 veranschaulicht, der Druckluftversorgung der Feststellbremse dienen. Alternativ kann die Druckluft für die Feststellbremse von einem separaten Druckluftvorratsbehälter zugeführt werden.

Durch Betätigung eines Bremspedals 22 erzeugt der Bremswertgeber 16 entweder durch elektrische Ansteuerung von elektropneumatischen Einrichtungen oder direkt eine pneumatische Stellgröße, die über eine Druckluftleitung 24, 26 an den kombinierten Betriebs- und Federspeicherbremszylinder 12 geleitet wird.

Der kombinierte Betriebs- und Federspeicherbremszylinder 12 ist als kombinierter Federspeicher-/Membranzylinder ausgebildet. Er weist neben der Funktion eines Membranzylinders zusätzlich eine Federspeicherfunktion auf. Dieser Bremszylinder 12 weist daher einen Membranteil 28, welcher pneumatisch mit der Betriebsbremsanlage verbunden sowie mit dem eigentlichen Bremsdruck beaufschlagbar ist, und einen Federspeicherteil 30 auf, welcher pneumatisch von dem Membranteil 28 getrennt und über gesonderte Druckluftleitungen 32, 34 mit Druckluft beaufschlagbar ist. Der Federspeicherteil 30 bildet einen Teil der Feststellbremse. Der Federspeicherteil 30 beinhaltet die Federspeicherfunktion, welche bei Druckbeaufschlagung des Federspeicherteils 30 eine Speicherfeder vorspannt und dabei eine Bremswirkung der Federspeicherfunktion verhindert bzw. verringert, während sich bei Entlüftung des Federspeicherteils 30 die Speicherfeder entspannt und dabei eine Bremswirkung im Rahmen der Federspeicherfunktion auf die mit dem jeweiligen Bremszylinder verbundene Bremse ausübt. Bremszylinder dieses Typs werden im vorliegenden Zusammenhang als Federspeicherbremszylinder bezeichnet.

Zur Vermeidung einer mechanischen Überbeanspruchung der Bremsmechanik ist ein als Wechselventil bzw. Select-High-Ventil ausgebildeter, Überlastschutzventil 35 vorgesehen, das zwischen den Federspeicherteil 30, einen pneumatischen Ausgang 102 des Feststellbremsmoduls 14 und den den ausgesteuerten Druck aufweisenden Ausgang des Bremswertgebers 16 geschaltet ist. Dieses Überlastschutzventil 35 wählt den höheren der beiden Drücke, nämlich des ausgesteuerten Bremsdrucks am Ausgang des Bremswertgebers 16 bzw. des von der luftmengenverstärkenden Ventileinrichtung 64 zur Verfügung gestellten Druckes, aus und führt diesen dem Federspeicherteil 30 des Federspeicherbremszylinders 12 zu. Dieses Überlastschutzventil 35 verhindert eine Addition der von der Betriebsbremse, d.h. über den pneumatischen Teil bzw. Membranteil 28 zugeführten Bremskraft mit der von der Feststellbremse, d.h. dem Federspeicherteil 30 zugeführten Bremskraft, um auf diese Weise eine mechanische Überbeanspruchung der Bremsmechanik der diesem Bremszylinder zugeordneten Radbremse zu vermeiden. Die dem Bremszylinder über den Membranteil 28 zugeführte Bremskraft wird durch die dargestellte Konstruktion nicht um die von dem Federspeicherteil 30 ausgeübte Bremskraft erhöht, da im Falle einer Betätigung der Betriebsbremse die von der Speicherfeder ausgeübte Bremskraft um eine der Betätigung der Betriebsbremse entsprechende Kraft reduziert wird. Somit kann eine kritische Überbeanspruchung der entsprechenden Radbremse vermieden werden.

Mittels des Federspeicherbremszylinders wird eine Feststellbremsfunktion realisiert, die auch bei Fehlen von Druckluft eine Bremsung bzw. ein Feststellen des Fahrzeuges ermöglicht. Die Feststellbremsfunktion ist aktiv, wenn der jeweilige Federspeicherteil 30 des Federspeicherbremszylinders 12 unterhalb eines Mindestdruckwertes entlüftet wird. Der Federspeicherteil 30 des Bremszylinders 12 ist über die Druckluftleitungen 32, 34 mit dem Feststellbremsmodul 14 pneumatisch verbunden, welches eine Drucksteuerung mit Hilfe elektronischer Steuerungsmittel erlaubt.

Ein manuell betätigbarer Feststellbremssignalgeber 36 ist über eine mehradrige elektrische Leitung 38 mit einer elektrischen Steuereinheit 40 des Feststellbremsmoduls 14 elektrisch verbunden.

Die elektrischen Einrichtungen im Fahrzeug werden von einer nicht dargestellten elektrischen Energieversorgungseinrichtung, z.B. einer Fahrzeugbatterie, über entsprechende elektrische Leitungen mit Energie versorgt.

Das Fahrzeug ist zur Ankopplung eines Anhängers mit einer weiteren mit Federspeicherbremszylindern ausgestalteten Feststellbremse geeignet. Die Bremsanlage 10 weist daher ein sog. Zugwagenschutzventil 42 auf, welches zur Bremsdrucksteuerung, insbesondere der Feststellbremse des Anhängers dient. Das Zugwagenschutzventil 42 wird über Druckluftleitungen 44, 46 mit dem Vorratsdruck der Druckluftvorratsbehälter 18, 20 versorgt. Ferner wird dem Zugwagenschutzventil 42 ein mittels einer luftmengenverstärkenden Ventileinrichtung, nämlich einem Relaisventil 48, für die Feststellbremse des Anhängers vorgesehener ausgesteuerter Druck bereitgestellt.

Das Relaisventil 48 weist einen Steuereingang 50, einen mittelbar oder unmittelbar mit der Atmosphäre verbundenen Entlüftungsanschluss 52 sowie einen über eine Druckluftleitung 54 mit dem Vorratsdruck der Druckluftvorratsbehälter 18, 20 verbindbaren Einlass 56 sowie einen über eine Druckluftleitung 58 mit dem Zugwagenschutzventil 42 verbindbaren Auslass 60 auf. Der Steuereingang 50 ist über eine Druckluftleitung 62 mit dem Feststellbremsmodul 14 verbunden.

Das Relaisventil 48 gibt an seinem Auslass 60 einen Ausgangsdruck in die Druckluftleitung 58 ab, der dem über die Druckluftleitung 62 an den Steuereingang 50 und somit dem in eine Steuerkammer des Relaisventils 48 eingesteuerten Druck entspricht. Das Relaisventil 48 entnimmt dabei die hierfür benötigte Druckluft aus der mit dem Einlass 56 des Relaisventils 48 verbundenen Druckluftleitung 54, die über weitere Druckluftleitungen mit den Druckluftvorratsbehältern 18, 20 verbunden ist.

Das Feststellbremsmodul 14 weist eine luftmengenverstärkenden Ventileinrichtung in Form eines Relaisventils 64 für das Zugfahrzeug auf. Das Relaisventil 64 umfasst einen unmittelbar oder mittelbar über Druckluftleitungen 66 bis 75 mit den Druckluftvorratsbehältern 18, 20 verbundenen Einlass 76. Ferner weist das Relaisventil 64 einen über Druckluftleitungen 78, 34, 32 mit dem Federspeicherteil 30 des Bremszylinders 12 verbundenen Auslass 80 auf. Ferner weist das Relaisventil 64 einen Steuereingang 82 auf, der über eine Druckluftleitung 84 mit einer Ventileinheit 86 zur Steuerung der Feststellbremse des Zugfahrzeugs verbunden ist.

Das Relaisventil 64 gibt an seinem Auslass 80 einen Ausgangsdruck in die Druckluftleitung 78 ab, der dem über die Druckluftleitung 64 an den Steuereingang 82 und somit einem in eine Steuerkammer des Relaisventils 64 eingesteuerten Druck entspricht. Das Relaisventil 64 entnimmt dabei die hierfür benötigte Druckluft aus der mit dem Einlass 76 des Relaisventils 64 verbundenen Druckluftzufuhrleitung 66. Eine etwaig notwendige Entlüftung der Druckluftleitung 78 erfolgt über einen mittelbar oder unmittelbar mit der Atmosphäre verbundenen Entlüftungsanschluss 88. Im in Fig. 1 gezeigten Ausführungsbeispiel ist dieser Entlüftungsanschluss 88 über eine Druckluftleitung 90 mit einer Entlüftungseinrichtung 92 verbunden.

Das Feststellbremsmodul 14 weist ferner jeweils vor die Druckluftvorratsbehälter 18, 20 geschaltete Rückschlagventile 94, 96 auf, welche verhindern, dass im Falle eines Druckabfalls oder eines Abreißens oder einer Beschädigung der Druckluftleitungen 71 bzw. 75 zum Druckluftvorratsbehälter 20 bzw. 18 ein Druckverlust in dem Feststellbremsmodul 14 auftritt. Ein derartiger ungewollter Druckabfall bzw. Druckverlust ist nämlich unerwünscht, da er zu einem schlagartigen Einlegen der Feststellbremse und somit zu einer Notbremsung des Zugfahrzeuges führen würde. Dies kann unter Umständen eine unkontrollierbare Fahrsituation auslösen.

Das Feststellbremsmodul 14 weist mehrere pneumatische Anschlüsse 98, 100, 102, 104, 106 auf. Über den Anschluss 98 wird die Druckluftleitung 74 mit der Druckluftleitung 75 zum Anschluss des ersten Druckluftvorratsbehälters 18 verbunden. Über den Anschluss 100 wird die Druckluftleitung 70 mit der Druckluftleitung 71 zum Anschluss des zweiten Druckluftvorratsbehälters 20 verbunden. Über den Anschluss 102 wird die Druckluftleitung 78 mit der Druckluftleitung 34 zur Verbindung des Relaisventils 64 mit dem Bremszylinder 12 verbunden. Über den Anschluss 104 wird die Druckluftleitung 44 zum Relaisventil 48 für die Anhängersteuerung mit einer Druckluftleitung 108 und somit über die Druckluftleitungen 67 bis 75 mit den Druckluftvorratsbehältern 18, 20 verbunden. Über den Anschluss 106 erfolgt eine Verbindung der Druckluftleitung 62 zum Steuereingang 50 des Relaisventils 48 für die Anhängersteuerung mit einer in dem Feststellbremsmodul 14 angeordneten Ventileinheit 110 zur Steuerung der Anhängerfeststellbremse.

Das Feststellbremsmodul 14 weist ferner einen innerhalb eines Deckels 112 untergebrachten Drucksensor 114 auf, der zur Überwachung des Vorratsdruckes innerhalb des Feststellbremsmoduls 14 dient. Der Drucksensor 114 ist zu diesem Zweck über eine Druckleitung 116 mit der Druckleitung 72 und somit mit den Druckleitungen 66 bis 71, 73 bis 75 sowie 108, 44 und 46 unmittelbar oder mittelbar verbunden.

Im Bereich des Deckels 112 ist ferner die bereits erwähnte elektrische Steuereinheit 40 angeordnet, mittels der über elektrische Leitungen 118, 120 die Ventileinheit 86 sowie die Ventileinheit 110 elektrisch schaltbar sind.

Die Ventileinheiten 86 bzw. 110 sind baugleich ausgeführt. Nachfolgend beschränken wir uns daher auf die Erläuterung der Ventileinheit 86.

Die Ventileinheiten 86 und 110 sind bei einer Ausführungsform als eigenständige Baugruppen ausgeführt. Alternativ sind die Ventileinheiten 86 und 110 jedoch entweder einzeln oder gemeinsam mit dem Relaisventil 64 und ggf. auch mit dem Relaisventil 48 integral in einem einzigen einheitlichen Feststellbremsmodul 14 realisiert. Bei einer Ausbildung der Ventileinheiten 86 bzw. 110 als selbstständige Bauteile weisen die Ventileinheiten nachfolgend näher ausgeführte pneumatische Anschlüsse auf. Sofern die Ventileinheiten jedoch in dem Feststellbremsmodul integriert sind, entfallen derartige Anschlüsse zugunsten entsprechender Verbindungsleitungen. In den Patentansprüchen ist daher der generische Begriff "Verbindungsorgan" verwendet, welcher jedwede Verbindungsmittel, d.h. sowohl Anschlüsse als auch anderweitige Verbindungen, wie Verbindungsleitungen, Verbindungskanäle oder -bohrungen und dergleichen mehr umfasst. In der nachfolgenden Beschreibung soll der Begriff "Anschluss" im Zusammenhang mit den Ventileinheiten 86 bzw. 110 somit auch als Verbindungsorgan verstanden werden, um auf diese Weise auch die Ausführungsform zu erläutern, bei der die Ventileinheiten 86 bzw. 110 im Feststellbremsmodul 14 integriert sind.

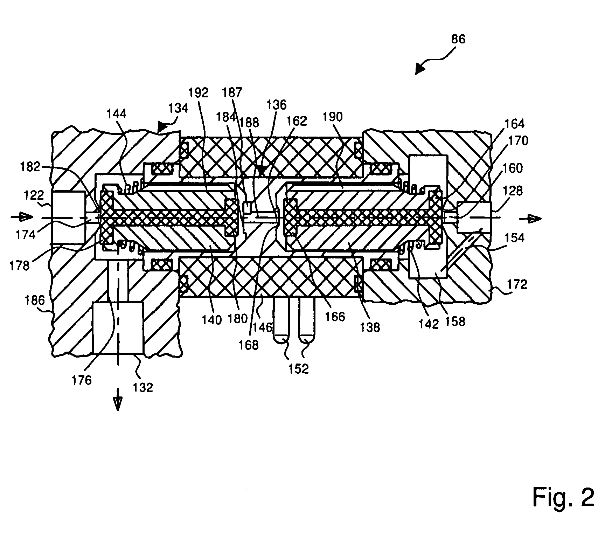

Die Ventileinheit 86 weist einen ersten Anschluss 122 auf, der über Druckluftleitungen 126, 68 bis 75 mit den Druckluftvorratsbehältern 18, 20 verbunden ist. Die Ventileinheit 86 weist ferner einen zweiten Anschluss 128 auf, der über eine Druckluftleitung 130 mit der Entlüftungseinrichtung 92 verbunden ist. Die Ventileinrichtung 86 weist ferner einen dritten Anschluss 132 auf, der über die Druckluftleitung 84 mit dem Steuereingang 82 des Relaisventils 64 verbunden ist. Die Ventileinheit 86 ist als Doppelankermagnetventil ausgebildet. Die konstruktive Ausgestaltung ergibt sich aus Fig. 2, welches das Doppelankermagnetventil 134 zeigt.

Das Doppelankermagnetventil 134 weist zwei in einer gemeinsamen Ankerführungsanordnung 136 angeordnete Magnetanker 138, 140 auf. Sie ist als Ankerführungsrohr ausgebildet, wobei der innere Rohrdurchmesser zumindest teilweise abschnittsweise konstant und an die Außendurchmesser der Magnetanker 138, 140 angepasst ist. Ein erster Magnetanker, nämlich der Primäranker 138, ist mittels einer Feder 142 belastet und wird in der Darstellung gemäß Fig. 2 daher nach rechts gedrückt. In entsprechender Weise ist ein zweiter Magnetanker, nämlich der Sekundäranker 140 mit einer Feder 144 belastet, welche den Magnetanker 140 in der in Fig. 2 gezeigten Darstellung nach links drückt. Die Ankerführungsanordnung 136 ist von einer Magnetspule 146 umgeben. Der äußere Durchmesser der Ankerführungsanordnung 136 ist an den inneren Durchmesser der Magnetspule 146 angepasst. Bei Einspeisung geeigneter Magnetströme in die Magnetspule 146 zieht die Magnetspule 146 den Primäranker 138 und ggf. den Sekundäranker 140 in Richtung des Spuleninneren. Der Primäranker 138 ist als Schaltelement für ein Entlüftungsventil 148 (Fig. 1) und der Sekundäranker 140 als Schaltelement für ein Belüftungsventil 150 vorgesehen. Die Magnetspule 146 weist zwei elektrische Anschlüsse 152 auf, die mittels der elektrischen Leitungen 118 mit der elektrischen Steuereinheit 40 verbunden sind.

Bei stromloser Magnetspule 146 befinden sich sowohl der Primäranker 138 als auch der Sekundäranker 140 in ihren durch die Federn 142, 144 bestimmten, in den Fig. 1 bis 3 dargestellten Grundstellungen. Das Belüftungsventil 150 sperrt in seiner Grundstellung den ersten Anschluss 122 vom dritten Anschluss 132 ab und das Entlüftungsventil 148 verbindet in seiner Grundstellung den zweiten Anschluss 128 mit dem dritten Anschluss 132 unter Zwischenschaltung einer als Drossel wirkenden Blende 154. Zwischen der Blende 154 und einen mittels des Primärankers 138 schaltbaren Auslass 160 des Entlüftungsventils 148 ist ein Druckluftspeicher 158 vorgesehen. Dieser Druckluftspeicher 158 ist als eine Kammer innerhalb der Ventileinheit 86 ausgebildet.

Der Auslass 160 des Entlüftungsventils 148 ist mit dem zweiten Anschluss 128 der Ventileinheit 86 verbunden. Ferner weist das Entlüftungsventil 148 einen Einlass 162 auf, der mit dem dritten Anschluss 132 über entsprechende Verbindungskanäle innerhalb der Ventileinheit 86 verbunden ist.

In der Grundstellung des Primärankers 138 ist dieser Einlass 162 pneumatisch über den Druckluftspeicher 158 und die Blende 154 mit dem zweiten Anschluss 128 verbunden. Ferner ist in der Grundstellung des Primärankers 138 der zweite Auslass 160 abgesperrt. In einer Schaltstellung des Primärankers 138, d.h. wenn der Primäranker durch Einspeisung eines ersten Magnetstroms einer vorbestimmten Höhe in Richtung des Inneren der Magnetspule 146 hineingezogen ist, ist der Druckluftspeicher 158 mit dem zweiten Auslass 160 pneumatisch verbunden und der Einlass 162 abgesperrt.

An beiden Enden des Primärankers 138 findet sich jeweils ein Elastomereinsatz 164, 166. Die Elastomereinsätze 164, 166 können auch einstückig ausgebildet sein, indem der Primäranker 138 eine durchgängige Bohrung aufweist, durch welche sich der Elastomereinsatz 164, 166 hindurchzieht. Die Elastomereinsätze 164, 166 bilden mit einer entsprechenden Ausformungen 168 an der Ankerführungsanordnung 136 bzw. einer Ausformung 170 an einem Entlüftungsventilkopf 172 jeweils einen Ventilsitz.

Das Belüftungsventil 150 weist einen mit dem ersten Anschluss 122 der Ventileinheit 86 verbundenen Einlass 174 und einen mit dem dritten Anschluss 132 verbundenen Auslass 176 auf. Der Auslass 176 ist ferner mit dem Einlass 162 des Entlüftungsventils über entsprechende Kanäle in der Ventileinheit 86 pneumatisch verbunden.

Der Sekundäranker 140 des Belüftungsventils 150 sperrt in seiner Grundstellung den Einlass 174 des Belüftungsventils 150 von seinem Auslass 176 ab. In seiner Schaltstellung verbindet der Sekundäranker 140 den Einlass 174 mit den Auslass 176.

Der Sekundäranker 140 weist an seinen beiden Enden jeweils einen Elastomereinsatz 178, 180 auf. Diese Elastomereinsätze können entweder separat oder, wie in Fig. 2 dargestellt, einstückig ausgebildet sein. Im Falle einer einstückigen Ausbildung tritt der Elastomereinsatz durch eine durch den Sekundäranker hindurchtretende Durchführung hindurch. Die an beiden Enden des Sekundärankers 140 hervortretenden Elastomereinsätze 178, 180 können mit entsprechenden Ausformungen 182, 184 an einem Belüftungsventilkopf 186 bzw. an der Ankerführungsanordnung 136 in Kontakt treten. Mittels des Elastomereinsatzes 178 und der Ausformung 182 wird ein Ventilsitz gebildet, wodurch der Einlass 174 des Belüftungsventils 150 abgesperrt werden kann. Aufgrund einer Ausnehmung 187 im Bereich der Ausformung 184 an der Ankerführungsanordnung 136 verbleibt der Anschlag zwischen Elastomereinsatz und Ausformung 184 stets geöffnet. Ferner ist dieser Anschlag über eine kanalartige Durchführung 188 mit dem Einlass 162 des Entlüftungsventils pneumatisch verbunden.

Der Primäranker 138 und der Sekundäranker 140 sind jeweils im wesentlichen rotationssymmetrisch ausgebildet. Sie weisen jedoch jeweils eine sich längs des jeweiligen Ankers erstreckende nutartige Ausnehmung 190 bzw. 192 auf. Die Ausnehmung 190 des Primärankers 138 schafft eine Verbindung zwischen dem Einlass 162 des Entlüftungsventils und dem Druckluftspeicher 158, wenn sich der Primäranker 138 in seiner Grundstellung befindet.

Die Ausnehmung 192 des Sekundärankers 140 schafft eine Verbindung zwischen der Ausnehmung 187 bzw. der Durchführung 188 und dem Auslass des Belüftungsventils 176 unabhängig von der Schaltstellung des Sekundärankers 140.
Aufgrund der beschriebenen Anordnung bildet das Entlüftungsventil 148 ein 3/2-Wege-Magnetventil. Das Belüftungsventil 150 bildet ein 2/2-Wege-Magnetventil.

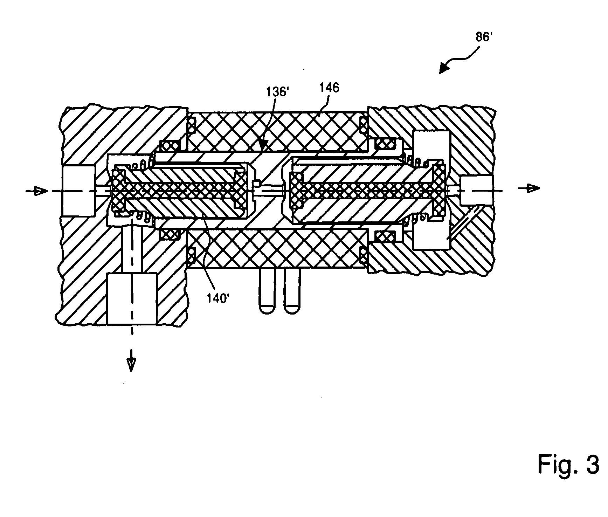

Fig. 3 entspricht weitgehend der in Fig. 2 dargestellten Ventileinheit und ist daher mit der Bezugsziffer 86' bezeichnet. Nachfolgend werden daher lediglich die Unterschiede zur Ventileinheit 86 erläutert. Alle übrigen Elemente sind baugleich und/oder funktionsgleich ausgeführt, wie im Zusammenhang mit Fig. 3 erläutert. Insofern wird auf die obigen Ausführungen Bezug genommen.

Die in Fig. 3 gezeigte Ventileinheit 86' unterscheidet sich von der in Fig. 2 gezeigten Ventileinheit 86 einerseits durch die Ausbildung der Ankerführungsanordnung 136' sowie andererseits durch die Ausbildung des Sekundärankers 140'.

Der Sekundäranker 140' ist nämlich mit einem geringeren Durchmesser ausgebildet als der in Fig. 2 gezeigte Sekundäranker 140. Hierdurch ergibt sich eine besonders raumsparende Anordnung. Dies ermöglicht auch, die Ankerführungsanordnung 136' im Bereich des Sekundärankers 140' schlanker auszugestalten. Insbesondere ist das dem Sekundäranker 146' zugewandte Ende der Ankerführungsanordnung 136' von gleichmäßigem Querschnitt ausgebildet. Die Ankerführungsanordnung 136' weist somit eine äußere Kontur auf, die der inneren Kontur der Magnetspule 146 entspricht und zwar im wesentlichen über die gesamte Länge der Ankerführungsanordnung 136'; lediglich an ihrem dem Primäranker 138 zugeordneten Ende weist die Ankerführungsanordnung 136' einen Vorsprung bzw. eine Verdickung auf. Aufgrund dieser Ausbildung der Ankerführungsanordnung 136' ist eine einfache Montage der Ventileinheit 86' ermöglicht, da die Ankerführungsanordnung 136' von einer Seite, nämlich in der in Fig. 3 gezeigten Orientierung von der rechten Seite, montiert werden kann. Überdies haben die unterschiedlichen Durchmesser von Primäranker und Sekundäranker eine Verbesserung des Schaltverhaltens der Ventileinheit 86' zur Folge.

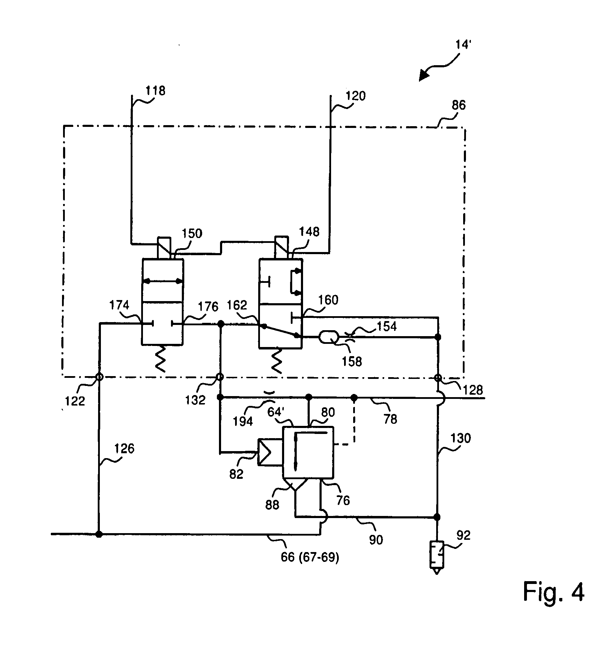

Fig. 4 zeigt ein weiteres Ausführungsbeispiel eines Feststellbremsmoduls 14', das weitgehend dem in Fig. 1 gezeigten Feststellbremsmodul 14 entspricht. Das in Fig. 4 gezeigte Feststellbremsmodul 14' zeigt jedoch lediglich die Ventileinheit 86 für das Zugfahrzeug. In Fig. 4 bezeichnen daher gleiche Bezugsziffern gleiche Teile wie in Fig. 1, so dass insofern wiederum auf die obigen Ausführungen Bezug genommen wird.

In bestimmten Fahrsituationen, z.B. bei einem Ausfall der elektrischen Energieversorgung, soll der Federspeicherteil 30 langsam über die Blende 154 entlüftet werden. Da jedoch das Steuervolumen des Relaisventils 64 bzw. 64' sehr klein ist, darf eine Entlüftung des Steuereingangs 82 des Relaisventils 64, 64' nur über eine sehr kleine Blende 154 erfolgen. Daher wäre die Blende 154 an sich mit einem sehr kleinen Durchmesser auszugestalten. Ein sehr kleiner Durchmesser birgt jedoch die Gefahr, dass er durch Verschmutzung oder Vereisung verstopft. Durch Verschmutzung oder Vereisung könnte jedoch die gedrosselte Entlüftung wirkungslos werden und somit ein sicheres Entlüften des Federspeicherteils 30 der Federspeicherbremszylinder nicht mehr gewährleistet sein. Um gleichwohl ein langsames Entlüften bei einem ausreichend großen Querschnitt der Blende 154 zu ermöglichen, wird das Steuervolumen des Relaisventils scheinbar, d.h. virtuell dadurch vergrößert, dass eine Verbindung zwischen dem Steuereingang 82 und dem Auslass 80 des Relaisventils 64' geschaffen wird. Diese Verbindung ist bspw. in Form einer eine Blende 194 bildenden Durchbohrung des Relaiskolbens ausgebildet. Diese Blende 194 vergrößert die zu entlüftende Luftmenge im Steuerraum des Relaisventils 64'. Auf diese Weise kann trotz einer ausreichend großen Öffnung der Blende 154 - um die Gefahr einer Verschmutzung oder Vereisung zu reduzieren - das Arbeitsvolumen am Steuereingang 82 des Relaisventils 64' ausreichend langsam entlüftet werden.

Die Blende 194 des Relaiskolbens des Relaisventils 64' weist vorteilhafterweise eine größere Querschnittsfläche als die Querschnittsfläche der Blende 154 der Ventileinheit 86 auf. Auf diese Weise entspricht der Druck am Steuereingang 82 des Relaisventils 64' im Wesentlichen dem Druck am Auslass 80 des Relaisventils 64'. Eine Entlüftung des Federspeicherteils 30 findet somit nicht mehr oder nur zu einem unwesentlichen Teil über den Entlüftungsanschluss 88 des Relaisventils 64' statt. Vielmehr wird im Wesentlichen das gesamte Volumen des Federspeicherteils 30 sowie das Steuervolumen am Steuereingang 82 des Relaisventils 64' über die Blende 154 entlüftet und zwar wegen der geringen Öffnung der Blende 154 ausreichend langsam.

Aufgrund des erfindungsgemäßen Doppelankerventils mit einer Blende für langsames Entlüften wird eine Ventileinheit bereitgestellt, die im Aufbau einfach und daher kostengünstig ausgestaltet ist und zugleich ein sicheres Abstellen des Fahrzeugs selbst bei einem Ausfall der elektrischen Energieversorgung gewährleistet. Durch Einspeisung eines hohen Magnetstroms kann das Relaisventil und somit der Federspeicherteil der Federspeicherbremszylinder belüftet werden. Durch Einspeisung eines niedrigen Stroms kann der Druck am Steuereingang des Relaisventils und somit auch im Federspeicherteil der Federspeicherbremszylinder gehalten werden. Im Falle eines getakteten niedrigen Stroms am Primär-Magnetventil wird durch schnelles Hin- und Herstellen des Primärankers eine schnelle Entlüftung ermöglicht. Im unbestromten Zustand erfolgt hingegen nur eine langsame Entlüftung des Steuerraums des Relaisventils über eine Blende.

Insgesamt ermöglicht die Erfindung eine einfache Realisierung einer Feststellbremse, die einen sicheren Zustand auch bei Ausfall der elektrischen Energieversorgung gewährleistet und zudem auf rein elektrischem Wege betätigt werden kann; insbesondere kann die oftmals bisher übliche pneumatische Verrohrung im Fahrerhaus zur Aktivierung der Feststellbremse entfallen und vollständig eine Bedienung der Feststellbremse über ein elektrisches Betätigungsorgan erreicht werden.

### Bezuaszeichenliste

- 10: Druckluftbremsanlage
- 12: kombinierter Betriebs- und Federspeicherbremszylinder
- 14: Feststellbremsmodul/Bremssteuerungseinrichtung
- 16: Bremswertgeber
- 18: erster Druckluftvorratsbehälter
- 20: zweiter Druckluftvorratsbehälter
- 22: Bremspedal
- 24: Druckluftleitung
- 26: Druckluftleitung
- 28: Membranteil
- 30: Federspeicherteil
- 32: Druckluftleitung
- 34: Druckluftleitung
- 35: Überlastschutzventil/Select-High-Ventil/Wechselventil
- 36: Feststellbremssignalgeber
- 38: elektrische Leitung
- 40: elektrische Steuereinheit
- 42: Zugwagenschutzventil
- 44: Druckluftleitung
- 46: Druckluftleitung
- 48: Relaisventil für Anhängersteuerung
- 50: Steuereingang
- 52: Entlüftungsanschluss
- 54: Druckluftleitung
- 56: Einlass
- 58: Druckluftleitung
- 60: Auslass
- 62: Druckluftleitung
- 64: Relaisventil für Zugfahrzeug
- 66: Druckluftleitung
- 67: Druckluftleitung
- 68: Druckluftleitung
- 69: Druckluftleitung
- 70: Druckluftleitung
- 71: Druckluftleitung
- 72: Druckluftleitung
- 73: Druckluftleitung
- 74: Druckluftleitung
- 75: Druckluftleitung
- 76: Einlass
- 78: Druckluftleitung
- 80: Auslass
- 82: Steuereingang
- 84: Druckluftleitung
- 86: Ventileinheit für Zugfahrzeug
- 88: Entlüftungsanschluss
- 90: Druckluftleitung
- 92: Entlüftungseinrichtung
- 94: Rückschlagventil
- 96: Rückschlagventil
- 98: Anschluss
- 100: Anschluss
- 102: Anschluss
- 104: Anschluss
- 106: Anschluss
- 108: Druckluftleitung
- 110: Ventileinheit zur Steuerung der Anhängerbremse
- 112: Deckel
- 114: Drucksensor
- 116: Druckleitung
- 118: elektrische Leitung
- 120: elektrische Leitung
- 122: erster Anschluss der Ventileinheit 86
- 128: zweiter Anschluss der Ventileinheit 86
- 130: Druckluftleitung
- 132: dritter Anschluss der Ventileinheit 86
- 134: Doppelankermagnetventil
- 136: Ankerführungsanordnung
- 138: Magnetanker/Primäranker
- 140: Magnetanker/Sekundäranker
- 142: Feder
- 144: Feder
- 146: Magnetspule
- 148: Entlüftungsventil
- 150: Belüftungsventil
- 152: Anschlüsse
- 154: Blende
- 158: Druckluftspeicher
- 160: Auslass des Entlüftungsventils
- 162: Einlass des Entlüftungsventils
- 164: Elastomereinsatz
- 166: Elastomereinsatz
- 168: Ausformung
- 170: Ausformung
- 172: Entlüftungsventilkopf
- 174: Einlass des Belüftungsventils
- 176: Auslass des Belüftungsventils
- 178: Elastomereinsatz
- 180: Elastomereinsatz
- 182: Ausformung
- 184: Ausformung
- 186: Belüftungsventilkopf
- 187: Ausnehmung
- 188: Durchführung
- 190: nutartige Ausnehmung
- 192: nutartige Ausnehmung
- 194: Blende des Relaisventils

## Patentansprüche

1. Ventileinheit für eine elektropneumatische Bremssteuerungseinrichtung (14) zur Steuerung einer Fahrzeugbremse, wobei die Ventileinheit (86) mit einem Steuereingang (82) einer luftmengenverstärkenden Ventileinrichtung (64) verbindbar und zur steuerbaren Be- und Entlüftung dieser Ventileinrichtung (64) über deren Steuereingang (82) ausgebildet ist, **gekennzeichnet durch** folgende Merkmale:
a) es ist ein Doppelankermagnetventil (134) vorgesehen mit zwei in einer gemeinsamen Ankerführungsanordnung (136) angeordneten und mit je einer Feder (142, 144) belasteten Magnetankern (138, 140), nämlich einem Primäranker (138) und einem Sekundäranker (140), welche jeweils **durch** eine für beide Magnetanker (138, 140) vorgesehene gemeinsame Magnetspule (146) betätigbar sind,
b) der Primäranker (138) ein Schaltelement eines Entlüftungsventils (148) zur Entlüftung des Steuereingangs (82) der luftmengenverstärkenden Ventileinrichtung (64) und der Sekundäranker (140) ein Schaltelement eines Belüftungsventils (150) zur Belüftung dieses Steuereingangs (82) ist,
c) bei stromloser Magnetspule (146) befinden sich der Primäranker (138) und der Sekundäranker (140) in ihrer **durch** die Federbelastung festgelegten Grundstellung, in der das Belüftungsventil (150) eine Belüftung absperrt und das Entlüftungsventil (148) eine Entlüftung aktiviert,
d) **durch** Einspeisung eines die Magnetspule (146) durchfließenden ersten Magnetstroms einer vorbestimmten Stärke ist der Primäranker (138) in seine **durch** die Magnetkraft bestimmte Schaltstellung versetzt, während sich der Sekundäranker (140) in der federbelasteten Grundstellung befindet, derart, dass das Belüftungsventil (150) die Belüftung und das Entlüftungsventil (148) die Entlüftung absperrt,
e) **durch** Einspeisung eines die Magnetspule (146) durchfließenden zweiten Magnetstroms einer vorbestimmten Stärke, welcher um einen vorbestimmten Betrag größer ist als der erste Magnetstrom, sind sowohl der Primäranker (138) als auch der Sekundäranker (140) in ihre **durch** die Magnetkraft bestimmten Schaltstellungen versetzt, derart, dass das Belüftungsventil (150) die Belüftung aktiviert und das Entlüftungsventil (148) die Entlüftung absperrt.

2. Ventileinheit nach Anspruch 1, **gekennzeichnet durch** folgende weitere Merkmale:
a) die Ventileinheit (86) weist ein mit einem Druckluftvorrat (18, 20) verbindbares erstes Verbindungsorgan (122), ein mit einer Entlüftungseinrichtung (92) verbindbares zweites Verbindungsorgan (128) und ein mit dem Steuereingang (82) der luftmengenverstärkenden Ventileinrichtung (64) verbindbares drittes Verbindungsorgan (132) auf,
b) in der Grundstellung des Primärankers (138) und der Grundstellung des Sekundärankers (140) sperrt das Belüftungsventil (150) das erste Verbindungsorgan (122) vom dritten Verbindungsorgan (132) ab und das Entlüftungsventil (148) verbindet das zweite Verbindungsorgan (128) mit dem dritten Verbindungsorgan (132),
c) in der Schaltstellung des Primärankers (138) und der Grundstellung des Sekundärankers (140) sperrt das Belüftungsventil (150) das erste Verbindungsorgan (122) vom dritten Verbindungsorgan (132) und das Entlüftungsventil (148) das zweite Verbindungsorgan (128) vom dritten Verbindungsorgan (132) ab,
d) in den Schaltstellungen des Primärankers (138) und des Sekundärankers (140) verbindet das Belüftungsventil (150) das erste Verbindungsorgan (122) mit dem dritten Verbindungsorgan (132) und das Entlüftungsventil (148) sperrt das zweite Verbindungsorgan (128) vom dritten Verbindungsorgan (132) ab.

3. Ventileinheit nach Anspruch 2, **dadurch gekennzeichnet, dass** bei stromloser Magnetspule (146) das Entlüftungsventil das zweite Verbindungsorgan (128) mit dem dritten Verbindungsorgan (132) über eine Blende (154) gedrosselt verbindet.

4. Ventileinheit nach einem der vorhergehenden Ansprüche, **dadurch gekennzeichnet, dass** durch Einspeisung eines die Magnetspule (146) durchfließenden alternierenden Magnetstroms mit wenigstens einem ersten und einem zweiten vorbestimmten Wert, wobei sich sowohl der Primäranker (138) als auch der Sekundäranker (140) bei Anwendung des Magnetstroms mit dem ersten Wert in der Grundstellung befinden und bei Anwendung des Magnetstroms mit dem zweiten Wert der Primäranker (138) in seine Schaltstellung versetzt ist und sich der Sekundäranker (140) in seiner Grundstellung befindet.

5. Ventileinheit nach Anspruch 4, **dadurch gekennzeichnet, dass** der erste Wert des alternierenden Magnetstroms Null ist und/oder der zweite Wert des alternierenden Magnetstroms der Stärke des ersten Magnetstroms entspricht.

6. Ventileinheit nach wenigstens Anspruch 3, **dadurch gekennzeichnet, dass** zwischen der Blende (154) und einem Auslass (160) des Entlüftungsventils (148) ein Druckluftspeicher (158) vorgesehen ist.

7. Ventileinheit nach einem der vorhergehenden Ansprüche, **dadurch gekennzeichnet, dass** das Entlüftungsventil (148) als 3/2-Wege-Magnetventil und das Belüftungsventil (150) als 2/2-Wege-Magnetventil ausgebildet ist.

8. Ventileinheit nach wenigstens Anspruch 2 und 6, **dadurch gekennzeichnet, dass** das Entlüftungsventil (148) einen mit dem dritten Verbindungsorgan (132) verbundenen Einlass (162) aufweist und der Auslass (160) des Entlüftungsventils (148) mit dem zweiten Verbindungsorgan (128) verbundenen ist, wobei der Primäranker (138) derart ausgebildet ist, dass in seiner Grundstellung dieser Einlass (162) mit dem Druckluftspeicher (158) verbunden und der Auslass (160) abgesperrt ist und in seiner Schaltstellung der Druckluftspeicher (158) mit dem Auslass (160) verbunden und der Einlass (162) abgesperrt ist.

9. Ventileinheit nach einem der vorhergehenden Ansprüche, **dadurch gekennzeichnet, dass** das Belüftungsventil (150) einen mit dem ersten Verbindungsorgan (122) verbundenen Einlass (174) und einen mit dem dritten Verbindungsorgan (132) und dem Einlass (162) des Entlüftungsventils (148) verbundenen Auslass (176) aufweist, wobei der Sekundäranker (140) derart ausgebildet ist, dass in seiner Grundstellung der Einlass (174) des Belüftungsventils (150) von dem Auslass (176) des Belüftungsventils (150) abgesperrt und in seiner Schaltstellung dieser Einlass (174) mit seinem Auslass (176) verbunden ist.

10. Ventileinheit nach einem der vorhergehenden Ansprüche, **dadurch gekennzeichnet, dass** der Primäranker (138) und der Sekundäranker (140) unterschiedliche Durchmesser aufweisen, insbesondere der Sekundäranker (140) einen kleineren Durchmesser aufweist als der Primäranker (138).

11. Ventileinheit nach einem der vorhergehenden Ansprüche, **dadurch gekennzeichnet, dass** der Primäranker (138) und der Sekundäranker (140) baugleich ausgeführt sind.

12. Ventileinheit nach einem der vorhergehenden Ansprüche, **dadurch gekennzeichnet, dass** der Primäranker (138) und der Sekundäranker (140) unterschiedlich tief in die Magnetspule (146) eintauchen, insbesondere der Primäranker (138) tiefer in die Magnetspule (146) eintaucht als der Sekundäranker (140).

13. Ventileinheit nach einem der vorhergehenden Ansprüche, **dadurch gekennzeichnet, dass** die von der dem Primäranker (138) zugeordneten Feder (142) auf den Primäranker (138) ausgeübte Federkraft geringer ist als die von der dem Sekundäranker (140) zugeordneten Feder (144) auf den Sekundäranker (140) ausgeübte Federkraft.

14. Elektropneumatische Bremssteuerungseinrichtung zur Steuerung einer Feststellbremse eines Fahrzeugs, bei dem druckluftbetätigbare Bremszylinder (12) zu Betätigung von Radbremsen vorgesehen sind, wobei wenigstens ein Bremszylinder als Federspeicherbremszylinder (12) ausgebildet ist und der Federspeicherteil (30) des Federspeicherbremszytinders(12) die Feststellbremse betätigt, mit wenigstens einer Ventileinheit (86) nach wenigstens Anspruch 2, wobei das dritte Verbindungsorgan (132) der Ventileinheit (86) mit dem pneumatischen Steuereingang (82) der luftmengenverstärkenden Ventileinrichtung (64) verbunden ist und wobei die luftmengenverstärkende Ventileinrichtung (64) einen mit einer Druckluftzufuhrleitung (66-75) zum Druckluftvorrat (18; 20) verbundenen Einlass (76) und einen mit einer Druckluftleitung (78) zum Federspeicherteil (30) des Federspeicherbremszylinders (82) verbundenen Auslass aufweist, wobei mittels des am Steuereingang (82) anlegbaren Steuerdrucks der Druck am Auslass (80) der luftmengenverstärkenden Ventileinrichtung (64) steuerbar ist.

15. Bremssteuerungseinrichtung nach Anspruch 14, **dadurch gekennzeichnet, dass** die luftmengenverstärkende Ventileinrichtung ein Relaisventil (64) ist, dessen Relaiskolben eine Öffnung (194) aufweist, welche den Auslass (80) des Relaisventils (64) mit dem Steuereingang (82) des Relaisventils (64) gedrosselt verbindet.

16. Bremssteuerungseinrichtung nach Anspruch 15 mit einer Ventileinheit gemäß Anspruch 3, **dadurch gekennzeichnet, dass** die Öffnung eine Blende (194) ist, die eine größere Querschnittsfläche als die Querschnittsfläche der Blende (154) der Ventileinheit (86) aufweist.

17. Elektrisch gesteuerte pneumatische Fahrzeugbremsanlage mit einer Betriebsbremse und einer Feststellbremse, wobei die Betriebsbremse ein Bremspedal (22) und in Wirkverbindung mit dem Bremspedal (22) stehende druckluftbetätigbare Bremszylinder (12) aufweist, wobei wenigstens ein Bremszylinder als Federspeicherbremszylinder (12) ausgebildet ist und der Federspeicherteil (30) des Federspeicherbremszylinders (12) die Feststellbremse betätigt, und wobei die Feststellbremse einen Feststellbremssignalgeber (36) zum Betätigen der Feststellbremse durch Entlüften des Federspeicherteils (30) des Federspeicherbremszylinders (12) aufweist, wobei die Fahrzeugbremsanlage eine Bremssteuerungseinrichtung (14) zur Steuerung der Feststellbremse nach einem der Ansprüche 14 bis 16 aufweist.

18. Fahrzeug mit einer elektrisch gesteuerten pneumatischen Bremsanlage nach Anspruch 17.

## Claims

1. Valve unit for an electro-pneumatic brake control unit (14) for controlling a vehicle brake, the valve unit (86) being connectable to a control input (82) of an air-quantity-boosting valve apparatus (64) and being implemented for the controllable aeration and deaeration of this valve apparatus (64) via the control input (82) thereof, **characterized by** the following features:
a) a double-armature solenoid valve (134) is provided having two magnet armatures (138, 140), which are situated in a common armature guide configuration (136) and are each loaded using one spring (142, 144), namely a primary armature (138) and a secondary armature (140), which can each be actuated by a common magnetic coil (146) provided for both magnetic armatures (138, 140),
b) the primary armature (138) is a switch element of a deaeration valve (148) for deaerating the control input (82) of the air-quantity-boosting valve apparatus (64) and the secondary armature (140) is a switch element of an aeration valve (150) for aerating this control input (82),
c) if the magnetic coil (146) is deenergized, the primary armature (138) and the secondary armature (140) are in their basic positions, which are established by the spring loading, in which the aerating valve (150) blocks aeration and the deaerating valve (148) activates a deaeration,
d) by feeding a first magnetic current, which permeates the magnetic coil (146), of a predetermined strength, the primary armature (138) is put into its switch position determined by the magnetic force, while the secondary armature (140) is in the spring-loaded basic position, so that the aerating valve (150) blocks the aeration and the deaerating valve (148) blocks the deaeration,
e) by feeding a second magnetic current, which permeates the magnetic coil (146), of a predetermined strength, which is greater than the first magnetic current by a predetermined absolute value, both the primary armature (138) and also the secondary armature (140) are put into their switch positions determined by the magnetic force, so that the aerating valve (150) activates the aeration and the deaerating valve (148) blocks the deaeration.

2. Valve unit according to Claim 1, **characterized by** the following further features:
a) the valve unit (86) has a first connection element (122), which is connectable to a compressed air supply (18, 20), a second connection element (128), which is connectable to a deaerating apparatus (92), and a third connection element (132), which is connectable to the control input (82) of the air-quantity-boosting valve apparatus (64),
b) in the basic position of the primary armature (138) and the basic position of the secondary armature (140), the aerating valve (150) blocks the first connection element (122) from the third connection element (132) and the deaerating valve (148) connects the second connection element (128) to the third connection element (132),
c) in the switch position of the primary armature (138) and the basic position of the secondary armature (140), the aerating valve (150) blocks the first connection element (122) from the third connection element (132) and the deaerating valve (148) blocks the second connection element (128) from the third connection element (132),
d) in the switch positions of the primary armature (138) and the secondary armature (140), the aerating valve (150) connects the first connection element (122) to the third connection element (132), and the deaerating valve (148) blocks the second connection element (128) from the third connection element (132).

3. Valve unit according to Claim 2, **characterized in that**, if the magnetic coil (146) is deenergized, the deaerating valve connects the second connection element (128) to the third connection element (132) in a throttled manner via an aperture (154).

4. Valve unit according to one of the preceding claims, **characterized in that**, by feeding an alternating magnetic current, which permeates the magnetic coil (146), having at least one first and one second predetermined value, both the primary armature (138) and also the secondary armature (140) being located in the basic position if the magnetic current having the first value is applied, and the primary armature (138) being put into its switch position and the secondary armature (140) being located in its basic position if the magnetic current having the second value is applied.

5. Valve unit according to Claim 4, **characterized in that** the first value of the alternating magnetic current is zero and/or the second value of the alternating magnetic current corresponds to the strength of the first magnetic current.

6. Valve unit according to at least Claim 3, **characterized in that** a compressed air accumulator (158) is provided between the aperture (154) and an outlet (160) of the deaerating valve (148).

7. Valve unit according to one of the preceding claims, **characterized in that** the deaerating valve (148) is implemented as a 3/2-way solenoid valve and the aerating valve (150) is implemented as a 2/2-way solenoid valve.

8. Valve unit according to at least Claims 2 and 6, **characterized in that** the deaerating valve (148) has an inlet (162), which is connected to the third connection element (132), and the outlet (160) of the deaerating valve (148) is connected to the second connection element (128), the primary armature (138) being implemented so that, in its basic position, this inlet (162) is connected to the compressed air accumulator (158) and the outlet (160) is blocked, and, in its switch position, the compressed air accumulator (158) is connected to the outlet (160) and the inlet (162) is blocked.

9. Valve unit according to one of the preceding claims, **characterized in that** the aerating valve (150) has an inlet (174), which is connected to the first connection element (122), and an outlet (176), which is connected to the third connection element (132) and the inlet (162) of the deaerating valve (148), the secondary armature (140) being implemented so that, in its basic position, the inlet (174) of the aerating valve (150) is blocked from the outlet (176) of the aerating valve (150) and, in its switch position, this inlet (174) is connected to its outlet (176).

10. Valve unit according to one of the preceding claims, **characterized in that** the primary armature (138) and the secondary armature (140) have different diameters, in particular, the secondary armature (140) has a smaller diameter than the primary armature (138).

11. Valve unit according to one of the preceding claims, **characterized in that** the primary armature (138) and the secondary armature (140) are implemented having identical constructions.

12. Valve unit according to one of the preceding claims, **characterized in that** the primary armature (138) and the secondary armature (140) plunge to different depths in the magnetic coil (146), in particular, the primary armature (138) plunges deeper into the magnetic coil (146) than the secondary armature (140).

13. Valve unit according to one of the preceding claims, **characterized in that** the spring force exerted on the primary armature (138) by the spring (142) associated with the primary armature (138) is less than the spring force exerted on the secondary armature (140) by the spring (144) associated with the secondary armature (140).

14. Electro-pneumatic brake control apparatus for controlling a parking brake of a vehicle, in which brake cylinders (12), which can be actuated by compressed air, are provided for actuating disc brakes, at least one brake cylinder being implemented as a spring-type actuator brake cylinder (12) and the spring-type actuator part (30) of the spring-type actuator brake cylinder (12) actuating the parking brake, having at least one valve unit (86) according to at least Claim 2, the third connection element (132) of the valve unit (86) being connected to the pneumatic control input (82) of the air-quantity-boosting valve apparatus (64), and the air-quantity-boosting valve apparatus (64) having an inlet (76), which is connected using a compressed air feed line (66-75) to the compressed air supply (18; 20), and an outlet, which is connected by a compressed air line (78) to the spring-type actuator part (30) of the spring-type actuator brake cylinder (12), the pressure at the outlet (80) of the air-quantity-boosting valve apparatus (64) being controllable using the control pressure which can be applied to the control input (82).

15. Brake control apparatus according to Claim 14, **characterized in that** the air-quantity-boosting valve apparatus is a relay valve (64), whose relay piston has an opening (194), which connects the outlet (80) of the relay valve (64) to the control input (82) of the relay valve (64) in a throttled manner.

16. Brake control apparatus according to Claim 15 having a valve unit according to Claim 3, **characterized in that** the opening is an aperture (194), which has a larger cross-sectional area than the cross-sectional area of the aperture (154) of the valve unit (86).

17. Electrically controlled pneumatic vehicle brake system having a service brake and a parking brake, the parking brake having a brake pedal (22) and brake cylinders (12), which are operationally linked to the brake pedal (22) and can be actuated by compressed air, at least one brake cylinder being implemented as a spring-type actuator brake cylinder (12) and the spring-type actuator part (30) of the spring-type actuator brake cylinder (12) actuating the parking brake, and the parking brake having a parking brake signal generator (36) for actuating the parking brake by deaerating the spring-type actuator part (30) of the spring-type actuator brake cylinder (12), the vehicle brake system having a brake control apparatus (14) for controlling the parking brake according to one of Claims 14 to 16.

18. Vehicle having an electrically controlled pneumatic brake system according to Claim 17.

## Revendications

1. Unité de soupape pour un dispositif de commande de freinage électropneumatique (14) pour la commande d'un frein de véhicule, l'unité de soupape (86) pouvant être connectée à une entrée de commande (82) d'un dispositif de soupape (64) à amplification de la quantité d'air et étant réalisée en vue de la ventilation et de la désaération commandable de ce dispositif de soupape (64) par le biais de son entrée de commande (82), **caractérisée par** les caractéristiques suivantes:
a) il est prévu une électrovanne à double armature (134) avec deux armatures magnétiques (138, 140) disposées dans un agencement de guidage d'armature commun (136) et sollicitées par un ressort respectif (142, 144), à savoir une armature primaire (138) et une armature secondaire (140), qui peuvent être chacune actionnées par une bobine magnétique (146) commune prévue pour les deux armatures magnétiques (138, 140),
b) l'armature primaire (138) est un élément de commutation d'une soupape de désaérage (148) pour le désaérage de l'entrée de commande (82) du dispositif de soupape (64) à amplification de la quantité d'air et l'armature secondaire (140) est un élément de commutation d'une soupape de ventilation (150) pour la ventilation de cette entrée de commande (82),
c) lorsque la bobine magnétique (146) n'est pas alimentée, l'armature primaire (138) et l'armature secondaire (140) se trouvent dans leur position de base fixée par la sollicitation des ressorts, dans laquelle la soupape de ventilation (150) bloque une ventilation et la soupape de désaérage (148) active un désaérage,
d) par injection d'un premier flux magnétique traversant la bobine magnétique (146), d'une intensité prédéterminée, l'armature primaire (138) est déplacée dans sa position de commutation déterminée par la force magnétique, tandis que l'armature secondaire (140) se trouve dans la position de base sollicitée par ressort, de telle sorte que la soupape de ventilation (150) bloque la ventilation et que la soupape de désaérage (148) bloque le désaérage,
e) par injection d'un deuxième flux magnétique traversant la bobine magnétique (146), d'une intensité prédéterminée, qui est supérieure d'une valeur prédéterminée au premier flux magnétique, l'armature primaire (138) ainsi que l'armature secondaire (140) sont toutes deux déplacées dans leurs positions de commutation déterminées par la force magnétique, de telle sorte que la soupape de ventilation (150) active la ventilation et que la soupape de désaérage (148) bloque le désaérage.

2. Unité de soupape selon la revendication 1, **caractérisée par** les caractéristiques supplémentaires suivantes:
a) l'unité de soupape (86) présente un premier organe de connexion (122) pouvant être connecté à une réserve d'air sous pression (18, 20), un deuxième organe de connexion (128) pouvant être connecté à un dispositif de désaérage (92), et un troisième organe de connexion (132) pouvant être connecté à l'entrée de commande (82) du dispositif de soupape (64) à amplification de la quantité d'air,
b) dans la position de base de l'armature primaire (138) et dans la position de base de l'armature secondaire (140), la soupape de ventilation (150) bloque le premier organe de connexion (122) par rapport au troisième organe de connexion (132) et la soupape de désaérage (148) relie le deuxième organe de connexion (128) au troisième organe de connexion (132),
c) dans la position de commutation de l'armature primaire (138) et dans la position de base de l'armature secondaire (140), la soupape de ventilation (150) bloque le premier organe de connexion (122) par rapport au troisième organe de connexion (132) et la soupape de désaérage (148) bloque le deuxième organe de connexion (128) par rapport au troisième organe de connexion (132), et
d) dans les positions de commutation de l'armature primaire (138) et de l'armature secondaire (140), la soupape de ventilation (150) relie le premier organe de connexion (122) au troisième organe de connexion (132) et la soupape de désaérage (148) bloque le deuxième organe de connexion (128) par rapport au troisième organe de connexion (132).

3. Unité de soupape selon la revendication 2, **caractérisée en ce que**, lorsque la bobine magnétique (146) n'est pas alimentée, la soupape de désaérage relie le deuxième organe de connexion (128) au troisième organe de connexion (132) de manière étranglée par le biais d'un diaphragme (154).

4. Unité de soupape selon l'une quelconque des revendications précédentes, **caractérisée en ce que** par injection d'un flux magnétique alternatif traversant la bobine magnétique (146), avec au moins une première et une deuxième valeur prédéterminée, l'armature primaire (138) ainsi que l'armature secondaire (140) se trouvent dans la position de base lors de l'application du flux magnétique avec la première valeur, et l'armature primaire (138) est déplacée dans sa position de commutation et l'armature secondaire (140) se trouve dans sa position de base lors de l'application du flux magnétique avec la deuxième valeur.

5. Unité de soupape selon la revendication 4, **caractérisée en ce que** la première valeur du flux magnétique alternatif est nulle et/ou la deuxième valeur du flux magnétique alternatif correspond à l'amplitude du premier flux magnétique.

6. Unité de soupape selon au moins la revendication 3, **caractérisée en ce que** l'on prévoit un accumulateur d'air sous pression (158) entre le diaphragme (154) et une sortie (160) de la soupape de désaérage (148).

7. Unité de soupape selon l'une quelconque des revendications précédentes, **caractérisée en ce que** la soupape de désaérage (148) est réalisée sous forme d'électrovanne à 3/2 voies et la soupape de ventilation (150) est réalisée sous forme d'électrovanne à 2/2 voies.

8. Unité de soupape selon au moins l'une quelconque des revendications 2 et 6, **caractérisée en ce que** la soupape de désaérage (148) présente une entrée (162) connectée au troisième organe de connexion (132) et la sortie (160) de la soupape de désaérage (148) est connectée au deuxième organe de connexion (128), l'armature primaire (138) étant réalisée de telle sorte que, dans sa position de base, cette entrée (162) soit connectée à l'accumulateur d'air sous pression (158) et que la sortie (160) soit bloquée, et que, dans sa position de commutation, l'accumulateur d'air sous pression (158) soit connecté à la sortie (160) et que l'entrée (162) soit bloquée.

9. Unité de soupape selon l'une quelconque des revendications précédentes, **caractérisée en ce que** la soupape de ventilation (150) présente une entrée (174) connectée au premier organe de connexion (122) et une sortie (176) connectée au troisième organe de connexion (132) et à l'entrée (162) de la soupape de désaérage (148), l'armature secondaire (140) étant réalisée de telle sorte que, dans sa position de base, l'entrée (174) de la soupape de ventilation (150) soit bloquée par rapport à la sortie (176) de la soupape de ventilation (150) et que, dans sa position de commutation, cette entrée (174) soit connectée à sa sortie (176).

10. Unité de soupape selon l'une quelconque des revendications précédentes, **caractérisée en ce que** l'armature primaire (138) et l'armature secondaire (140) présentent des diamètres différents, notamment l'armature secondaire (140) présente un plus petit diamètre que l'armature primaire (138).

11. Unité de soupape selon l'une quelconque des revendications précédentes, **caractérisée en ce que** l'armature primaire (138) et l'armature secondaire (140) sont réalisées avec une construction identique.

12. Unité de soupape selon l'une quelconque des revendications précédentes, **caractérisée en ce que** l'armature primaire (138) et l'armature secondaire (140) plongent à des profondeurs différentes dans la bobine magnétique (146), notamment l'armature primaire (138) plonge plus profondément dans la bobine magnétique (146) que l'armature secondaire (140).

13. Unité de soupape selon l'une quelconque des revendications précédentes, **caractérisée en ce que** la force de ressort exercée sur l'armature primaire (138) par le ressort (142) associé à l'armature primaire (138) est plus faible que la force de ressort exercée sur l'armature secondaire (140) par le ressort (144) associé à l'armature secondaire (140).

14. Dispositif de commande de freinage électropneumatique pour la commande d'un frein de stationnement d'un véhicule, dans lequel sont prévus des cylindres de frein (12) pouvant être commandés par de l'air sous pression, pour l'actionnement de freins de roue, au moins un cylindre de frein étant réalisé sous forme de cylindre de frein à accumulateur à ressort (12) et la partie d'accumulateur à ressort (30) du cylindre de frein à accumulateur à ressort (12) actionnant le frein de stationnement, comprenant au moins une unité de soupape (86) selon au moins la revendication 2, le troisième organe de connexion (132) de l'unité de soupape (86) étant connecté à l'entrée de commande pneumatique (82) du dispositif de soupape (64) à amplification de la quantité d'air et le dispositif de soupape (64) à amplification de la quantité d'air présentant une entrée (76) connectée à une conduite d'amenée d'air sous pression (66-75) au réservoir d'air sous pression (18 ; 20) et une sortie connectée à une conduite d'air sous pression (78) allant à la partie d'accumulateur à ressort (30) du cylindre de frein à accumulateur à ressort (12), la pression à la sortie (80) du dispositif de soupape (64) à amplification de la quantité d'air pouvant être commandée au moyen de la pression de commande pouvant être appliquée à l'entrée de commande (82).

15. Dispositif de commande de freinage selon la revendication 14, **caractérisé en ce que** le dispositif de soupape à amplification de la quantité d'air est une soupape relais (64), dont le piston de relais présente une ouverture (194) qui relie de manière étranglée la sortie (80) de la soupape relais (64) à l'entrée de commande (82) de la soupape relais (64).

16. Dispositif de commande de freinage selon la revendication 15, comprenant une unité de soupape selon la revendication 3, **caractérisé en ce que** l'ouverture est un diaphragme (194), qui présente une surface en section transversale supérieure à la surface en section transversale du diaphragme (154) de l'unité de soupape (86).

17. Installation de freinage de véhicule pneumatique à commande électrique, comprenant un frein de service et un frein de stationnement, le frein de service présentant une pédale de frein (22) et des cylindres de frein (12) pouvant être actionnés par de l'air sous pression et en liaison fonctionnelle avec la pédale de frein (22), au moins un cylindre de frein étant réalisé sous forme de cylindre de frein à accumulateur à ressort (12) et la partie d'accumulateur à ressort (30) du cylindre de frein à accumulateur à ressort (12) actionnant le frein de stationnement, et le frein de stationnement présentant un générateur de signaux de frein de stationnement (36) pour l'actionnement du frein de stationnement par désaérage de la partie d'accumulateur à ressort (30) du cylindre de frein à accumulateur à ressort (12), l'installation de freinage de véhicule présentant un dispositif de commande de freinage (14) pour la commande du frein de stationnement selon l'une quelconque des revendications 14 à 16.

18. Véhicule comprenant une installation de freinage pneumatique à commande électrique selon la revendication 17.
